# EUROPEAN PATENT APPLICATION

(11) **EP 2 208 418 A1**
(43) Date of publication of application: **21.07.2010**
(21) Application number: 07823049.7
(22) Date of filing: 13.11.2007
(51) Int. Cl.: A01N 25/24

(54) **PROTECTIVE COATING THAT CAN BE APPLIED AS A PHYTOSANITARY PROTECTION MEANS TO PROTECT AGAINST AGRICULTURAL PESTS AND DISEASES AND METHOD FOR APPLYING SAME**

(71) Applicant: Biodurcal, S.l., 18650 Durcal (ES)
(72) Inventor: MAROTO CABA, Francisco, E-18650 - Durcal (ES); GUILLAMÓN AYALA, Enrique, E-18650 - Durcal (ES); MARTÍNEZ LÓPEZ, Félix, E-18650 - Durcal (ES)
(74) Representative: Munoz Garcia, Antonio
(86) International application number: PCT/ES2007/000644
(87) International publication number: WO 2009/063099

(57) **Abstract**

The invention relates to a protective coating that can be applied as a phytosanitary protection means to protect against agricultural pests and diseases and to a method for applying same. The coating comprises a film-forming food agent (2) which covers the plant (4) to be treated, forming a basic element representing between 3 and 60 wt.-% in a complex that can also include an active agent (3) formed by other substances having a specific activity, such as organic or aqueous natural extracts of species and plants, natural or plant-isolated active compounds, insecticides, biological acaricides or other substances having an analogous behaviour, representing between 0.0001 and 60 wt.-%. The coating can also include horticultural or mineral oils, coadjuvants, reinforcing substances and/or additives and pesticides, including fungicides and herbicides, fertilisers and biocontrol agents. The invention can be applied in the form of pure formulations, mixtures or solutions by means of spraying, fogging, wetting, atomisation or any other system.

## Description

### Object of the Invention

As expressed in the title of the present specification, the invention relates to a protective coating that can be applied as a phytosanitary protection means to protect against agricultural pests and diseases and to the method for applying same.

More specifically, the object of the invention consists of a phytosanitary protection means, combining the barrier effect of a film-forming coating agent for food use, with the repellent effect of an active agent formed by specific substances, the application of which in the field prevents or mitigates the attack of pests, diseases, physiological alterations or derived problems, with a negative environmental impact on the agricultural crop productions.

The invention relates to the use of a protective coating for offering an innovative alternative as a phytosanitary protection means, which allows a healthy and sustainable plant production, minimizing the problems of residues in foods, as well as the toxicological and environmental impact risks. Said protective coating consists of a film-forming food agent as a basic element, in a complex which can furthermore include other substances with a specific activity on pests, physiological alterations or abiotic stress factors.

### Field of Application

The field of application of the present invention is comprised within the agricultural sector, and more specifically, within the sector dedicated to the manufacture and/or preparation of products intended for the protection against pests and diseases in plants and crops.

### Background of the Invention

A suitable control of the pests and diseases affecting the crops during the treatments in the field is essential for minimizing the losses generated by said alterations. Traditionally, the use of synthetic chemical products has been the most used system for the control of these rots, and said products (insecticides, pesticides, herbicides, etc.) have had a highly pronounced role in the increase of agricultural production and productivity.

However, the continuous and indiscriminate use of these substances has caused their accumulation in the different links of the food chain, causing negative effects on human health and living organisms, in addition to other environmental problems and the onset of resistances. To that end, social and legal requirements currently demand an agriculture which is less aggressive and does not use toxic agrochemical products.

The search for methods for a natural protection of the crops is therefore a key element in agricultural productivity today. Natural protection reduces the risk of resistance in insects, has fewer lethal consequences for the natural enemies thereof, reduces the appearance of secondary pests, is less harmful for humans and does not cause damages in the environment.

Based on the need to find a natural alternative for the control of insects and other pests, and thus replace synthetic pesticides, products such as biological insecticides arise, which offer high environmental safety and a moderate agricultural efficacy. Their use is quite widespread, and there are many patents describing different formulations and applications of said biorational agents. Some references to be emphasized are:
US4379168, which describes a composition containing d-limonene as an active substance, with surfactants or emulsifiers and water.
US6258369 and US6277389, which describe non-toxic aqueous pesticides containing at least one high terpene containing natural oil.
KR20030029435, which describes a natural insecticide formulation containing extracts of garlic, onion, pepper and flavonoids.
MXPA03011892, which describes a chemical composition with mustard oil, lemon extract, an aldehyde and surfactants, useful for the treatment of soils and as an insecticide.
WO03056917, which relates to a biorational insecticide/fungicide, containing a high terpene containing natural oil, and to its method of application.
KR20040064006, which describes a composition of chitosan and pepper extract with fungicidal and insecticidal activity.

However, many of the products described in these inventions, or other similar ones, have a series of drawbacks limiting their commercial extension. Their high price (in relation to most of the usual synthetic agents), the instability and volatility of many of their components, a moderate effectiveness, and a high phytotoxicity when the application dose is increased, must be considered among the drawbacks.

### Description of the Invention

The novelty of the present invention lies in putting at the disposal of farmers an effective global alternative for favouring the health of cultivated plants, compared to conventional phytosanitary products, eliminating or minimizing the negative connotations that this type of product entails: toxicological, ecotoxicological, residues, resistances, phytotoxicity, etc.

This alternative solution is given by the application of a product formulated in the form of a complex between a coating agent or support and active components contained therein, which fulfil the function of repelling, neutralizing or controlling pathogens or pests. The synergistic combination of both components increases the efficacy of the treatment, and also its safety and persistence over time. Said combination is the key aspect of the present invention.

The mode of action of the product is the following:

Usual phytosanitary products base their activity on fungi, bacteria, mites, etc., at specific points of action, but the route of access to them is the crop, penetrating the tissues and persisting therein for a certain time. In other words, the parasite or pathogen is controlled inside (or from the inside) of the crop. It is much more rational to consider the development of phytosanitary protection systems or means preventing the parasite or pathogen from reaching and damaging the crop, without the active product penetrating therein. The coating origin of this invention achieves such effect through the formation of a protective film.

The film formed by the leaf application of the coating exerts a physical barrier on the plant, and thus minimizes many of the drawbacks of the treatments of direct application thereon: persistence, phytotoxicity, need for high doses, etc.

The protective coating does not initially have a biocidal mature, but rather it can be considered as a plant strengthener which contributes to improving the vegetation of the crops, preventing the parasite from reaching and damaging the latter, without the product penetrating therein. To that end, it blocks the access of the pest to the leaf epidermis, and at the same time, with a repellent action, it prevents its feeding. It thus prevents or delays the need to use conventional acaricides or insecticides.

The coating agent, with a food nature, therefore has a dual function since, in addition to acting as a physical barrier against pests and other pathogens by controlling the access thereof to the epidermis of the crops, it also interferes in the usual behaviour of insects and mites in terms of their attack target, confusing them with respect to the attractiveness upon externally modifying, in the surroundings of the plant, the odour, taste or colorimetric identification thereof. In short, it acts by mitigating the damages that the pests may cause, but it also contributes by facilitating the defence against other factors, such as water stress, salinity or limit temperatures. The invention contemplates, as an absolutely innovative concept, the regulatory function assumed by the coating directly on the plant, acting as a small individualized greenhouse regulating the transpiration, the moisture, etc.

Cultivated plants defend themselves from the attack of pests and pathogens by forming natural barriers. These barriers can be physical, exuding and concentrating epicuticular waxes and closing stomata, or chemical, activating the formation of secondary metabolites and concentrating them in the proximity of the epidermis. The coating agents provided in this invention reinforce the natural defence response to create a protection barrier, markedly increasing said barriers. Furthermore, it prevents the loss of epicuticular wax, making the penetration of diseases in the leaf difficult. Due to its film-producing effect, the coating forms a layer or film on the surface of the leaf which reduces its dehydration. The coating of the leaf mass does not prevent the natural gas exchange, but does prevent, however, the loss of water by evapotranspiration, the latter being a factor of great interest in the extreme conditions of the agriculture of countries with a water deficit.

Beyond the advantages directly provided by the protective coating as a physical barrier, this agent can act as a support for active substances conferring an additional chemical or biological protection. The synergistic combination of both phenomena, the physical barrier effect, conferred by the coating, plus the repellent effect, conferred by the extracts or active substances, provides excellent protection results, and constitutes the basic idea of this invention.

### Description of the Drawings

To complement the description which is being made and for the purpose of aiding to better understand the features of the invention, a set of drawings is attached to the present specification as an integral part thereof, in which the following has been depicted with an illustrative and non-limiting character:

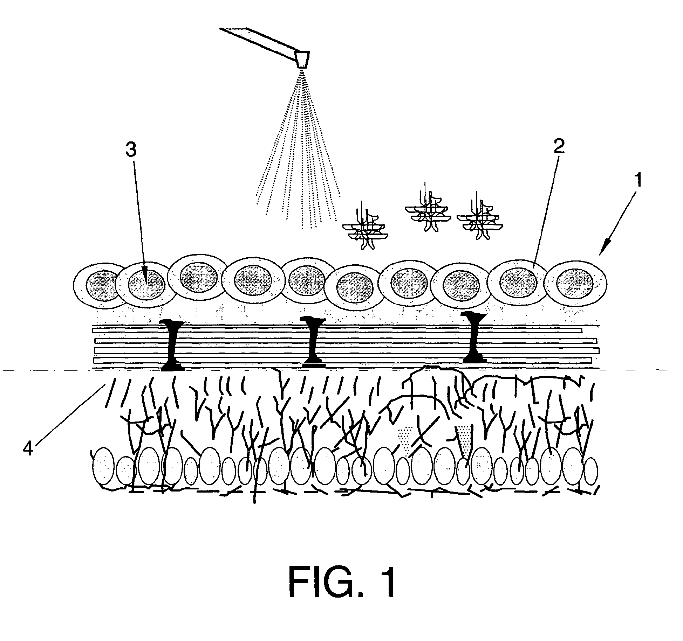

Figure 1 shows a schematic view of an embodiment of the protective coating object of the invention, enlarged in detail and with the parts which it comprises having been exaggerated, which graphically illustrates the dual protection which it offers, the parts and elements which it is made up of as well as its configuration and arrangement being observed.

### Preferred Embodiment of the Invention

In view of the mentioned sole Figure 1, and according to the numbers adopted therein, it can be observed how the invention is essentially configured from a protective coating (1) that can be applied to crops which comprises a film-forming agent (2) which externally covers each plant (4) of the crop to be treated and into which an active agent (3) is optionally incorporated.

The film-producing or film-forming or coating agent (2) considered in the invention has a food nature, which is an assurance of its innocuousness in the usual work conditions and is a potential support of toxic or phytotoxic agents, decreasing the residue and toxicological effects of said toxic agents.

Examples of this agent (2) can be the polymers obtained by the polymerization or copolymerization of monomers such as vinyl acetate, acrylic acid, acrylic acid esters (acrylates), fatty acid mono- and diglycerides and the esters thereof.

Preferably, the acrylic acid ester, vinyl acetate and fatty acid mono- and diglyceride ester copolymer aqueous dispersions are considered as the most relevant film-forming agents, and it is thus shown in the Examples of the Invention.

These proposed film-forming agents allow a high versatility when designing the protective coating (1), according to the crop to be protected, the desired moisture resistance, the weather, the pest to be controlled or the active component which it contains. Thus, edible coatings resistant to water, to extreme temperatures, etc., or, on the contrary, coatings with opposite properties can be designed.

A large variety of products with a different origin and specific activity, which cause repulsion by odour, ataxia, respiratory or central or peripheral nervous system problems, or have an antifeedant action, post-digestive toxicity action, growth regulating action, oviposition inhibiting action, sterilizing action, etc., are contemplated as active agents (3). Additionally, usual synthetic insecticides and pesticides can also be incorporated into the coating (1), the application doses of which can be reduced since they are incorporated into the polymer, thus increasing the stability thereof.

The following options are especially relevant as active agents to be considered: natural extracts of species and other plants: garlic, onion, basil, clove, pepper, neem, etc.; plant isolated active compounds, or natural compounds identical thereto, such as organosulphur compounds typical of alliaceous plants: thiosulphinates, thiosulphonates and sulfoxides; compounds with insecticidal or antiparasitic properties: plant-isolated compounds, such as pyrethrins, rotenone or azadirachtin, or compounds obtained by fermentation, such as avermectins; active synthetic compounds or others.

The active substances which are preferably contemplated in this invention have a low or nil toxicity: (aqueous or alcoholic) garlic extract, highly refined horticultural oil, neem extracts and essential oil, identical natural products (such as identical natural organosulphur compounds of alliaceous plants) and natural antiparasitic agents such as rotenone, azadirachtin, avermectins or pyrethrins.

However, the remaining mentioned active agents can be likewise suitable in other circumstances, and, as has already been indicated, the coating could even contain agents with a higher toxicity (such as phytosanitary products or conventional synthesis insecticides). In the latter case, acting with the insecticidal/pesticidal agent (3) integrated in the coating (1) instead of applied directly on the plant, a number of advantages are achieved: reduction of application doses, increase in the stability of the active component and decrease of its phytotoxicity and residues in the crop.

The protective coating (1) of this invention can include, in addition to the two main components mentioned (film-forming agent (2) and active agent (3)), a large variety of coadjuvants, additives and/or reinforcing substances which are authorized for food or agricultural use. Antioxidants, UV absorbers, plasticizers, pigments and colorants, flavouring substances, pH regulating agents, surfactants, etc., are contemplated among these products.

The relative proportions of the ingredients of the formulations can range within wide limits and depend on the nature of the components forming- them and on their final application.

In relation to the film-forming agent (2), its amount can range between 3 and 60 wt.-%, preferably between 15 and 30% and particularly between 15 and 25%.

The amount of active agent (3) included in the coating (1) also varies extensively, depending on its nature. When it is a natural extract, such as aqueous garlic extract, it can range preferably between 20 and 30%; when they are identical natural compounds, between 1 and 20%, preferably between 3 and 12%; and when it is antiparasitic agents such as rotenone or avermectins, or phytosanitary pesticides, between 0.0001 and 10%, preferably between 0.001 and 3%. Against certain pests and crops, the film-forming agent (2) even allows by itself a certain degree of protection, without needing to include any active component therein; whereas, logically, on other occasions, the joint incorporation of several active agents (3) with a different effect, for the purpose of increasing the pests to be controlled and the protection, is much more effective.

The percentage of additives and coadjuvants varies depending on the compatibility of the products used as a coating agent and as active agents. An emulsifier, the content of which in the formula can vary between 0.5 and 25%, preferably between 1 and 10%, may be necessary. Sorbitan fatty acid esters and polyethoxyethylenated sorbitan fatty acid esters (Span and Polysorbate type products), particularly oleic acid esters (E-433 and E-494), are considered as the most suitable emulsifiers. Nevertheless, any food emulsifier providing homogeneity and good physical and mechanical properties to the formulation is valid.

The composition can also have incorporated therein mineral or horticultural oil, as another reinforcing means. It is a paraffin or isoparaffin oil, with a high degree of refining, and especially indicated for its use in agricultural processes and formulations. Its mechanism -of- action is by asphyxiating and repelling egg-laying females. Depending on the crop, the pest and the remaining components of the formulation, the amount of oil therein can vary between 0 and 40%, preferably between 5 and 25%, and particularly between 10 and 20%.

The formulation can also contain natural essences, such as sage, mint or rosemary, and other additives: a wide range of antioxidants, pH regulators such as phosphates or citric acid, or colorants such as chlorophylls, caramel or lycopene. The amount thereof depends on various factors, but it is normally less than 5 wt.-%.

In addition to the film-forming agent containing a repellent or insecticidal active agent, the plant can be treated with one or more of the following ingredients: other pesticides including fungicides and herbicides; fertilisers and biocontrol agents. These ingredients can be added in an independent or integrated manner in the coating agent itself.

Finally, in relation to the method of application of the invention, it must be indicated that, as appropriate in each case, the composition of the protective coating proposed by the invention can be applied in the form of pure active formulations, or in mixtures, in aqueous solutions or generally in any formulation, and that the coating is applied on the crop or plant by means of spraying, fogging, wetting, atomisation, or any other system of treatment or application, the one considered to be most appropriate or efficient in each case, preferably being by spraying a solution of the composition in water, with a dose between 5 to 50 grams of formulation per litre of water.

Tests performed and effectiveness of the protective coating.

Film-forming agents with different degrees of moisture resistance according to the climate of the cultivation have been tested, taking into account if the latter is performed in a greenhouse or outdoors, etc. The versatility of the invention allows designing coatings with different agents offering specific solutions which increase the efficacy of the treatments.

This efficacy and versatility has been demonstrated by means of performing a number of tests, in different geographical and climatic areas, and against a large variety of pests and crops, as diverse as *Bemisia tabaci* (whitefly) in greenhouse tomato, *Trialeurodes vaporarium* (whitefly) and *Frankliniella occidentalis* (Thrips) in greenhouse pepper, *liriomyza spp.* (leafminer) in greenhouse runner bean, *Aphis gossypii* (aphid) in melon, *Ceratitis capitata* (fruit fly) in nectarine and orange tree, *Tetranychus urticae* (red spider mite) in mandarin tree, *Oligonychus persea* (persea mite) in avocado and *Tetranychus urticae* (red spider mite) in rosebush, or *Phyllocnistis citrella* (leafminer fly) in lemon tree.

These tests have also served to fix the mode of application and the optimal doses, which are located between 15-20 grams of product per litre of water (although in some cases of special intensity or mildness of the attack it is necessary to adjust said doses). Given that the product does not have, by itself, biocidal activity, initiating the application before the onset of the problem by means of leaf spraying is recommended. The indicated dose is dissolved in the sufficient amount of water to facilitate the uniform distribution of the product on the crop. A correct calibration of the application equipment must be assured. It is also necessary to assure the complete and uniform dissolution of the product in the spray mixture.

To improve the use of the product it is necessary to use sufficient volume of mixture to achieve a complete and uniform coverage of the plants. The addition of a non-ionic wetting agent when preparing the spray mixture, and clean water, free of disinfectants and of oxidizing substances, is also recommended. In active growth or sprouting periods of the crops, to prevent the new vegetation from being unprotected, it is recommended to never exceed the interval of 7 day between applications.

Emphasis should be made on the fact that the coating exerts a dual protective function: as a physical barrier and a regulator of the (heat, salt or water) stress of the plant and by means of a repellent effect mitigating or preventing the attacks of pests. The following table summarizes the crops, and diseases or pests, for which, at the fixed dose, the application of specific acaricides, insecticides or fungicides is prevented or delayed, provided that the pathogen is not already established with very high levels of infestation.

| Crop | | Pests |
|---|---|---|
| Horticultural crops: fruit and leaf vegetables | Tomato, pepper, cucumber, melon, runner bean, melon, green bean, lettuce, cabbage, Brussels sprouts, celery, potato, garlic, onion, asparagus | Spider mite (*Tetranychus spp., Aculops lycopersicy, Polyphagotarsone*-*muslatus*) Whitefly (*Trialeurodes, Bemisia*), Thrips (*Frankliniella*), Leafminer (*Liriomyza*), Aphids |
| Citruses | Mandarin tree, orange tree, lemon tree | *Ceratitis capitata* (Fruit fly), *Tetranychus urticae* (red spider mite) Leafminer fly |
| Traditional fruit trees | Apple tree, pear tree, peach tree, apricot tree, cherry tree, plum tree | Pear tree psylla (*Psylla piri*) *Ceratitis spp.* Scale insects |
| Tropical fruit trees | Avocado tree, custard apple tree, mango tree | Spider mite (*Oligonychus Persea*) |
| Nut trees | Almond tree, hazelnut tree, walnut tree | Almond tree leaf skeletonizer moth (*Aglaope infausta*) Lacebug *(Monosteira unicostata* Mulsant and Rey) |
| Olive grove | Olive for pickling and oil | Olive fly (*Dacus oleae*) Coccoidea (*Saissetia oleae*) |
| Vine | Table grapes and grapes for wine production | Vine moths (*Lobesia botrana, Clysia ambigbella*) |
| Flower and ornamental plants | Rose, gerbera | Spider mite and aphids |
| General for all crops | | Preventive action for the damages caused by water stress, salt stress or by low or high temperatures |
| General for all crops | | Mitigating effect to prevent the attacks of fungal diseases or diseases of another type: *Phytophthora infestans Pseudoperonospora cubensis Bremia lactucae Phytophthora infestans Alternaria solani Venturia inaequalis, Venturia pirina, Molinilia spp. Phytophthora cinnamomi, Cercospora purpurea, Colletotrichum Phytophthora spp. Alternaria Alternata* |

### Observations on undesirable side effects.

### - Phytotoxicity on the target plants or on the products of these plants. Creation of resistances.

The product considered in the invention has not caused phytotoxic effects. No intolerance symptom has been observed in any of the tested crops, not even at the maximum doses applied. This fact opens up the possibility of using these coatings as supports of highly phytotoxic agents, which could be applied after the coating and maintain their repelling activity without coming into direct contact with the plant.

Due to its specific mode of action, the potential to create resistances is extremely low. On the contrary, these coatings could form part of a plan of treatments for limiting the onset of resistances to specific insecticides or acaricides.

### - Effect on the quality of the plants or on the products of the plants.

A number of efficacy tests have been performed with these coatings in the last two years, both officially authorized and extensive. In no case have adverse effects or alteration of the taste or other properties been reported. In the tests performed, effects on the crop transformation processes have not been observed either and there are no residues at the time of processing such crop.

### - Impact on following crops, adjacent crops, on treated plants or products of the plants which can be used for the propagation.

Even at exaggeratedly high product doses, no impact on the emergence of the seedlings was reported and there was no phytotoxicity in evaluated crops of different taxonomic groups. Adverse effects on following crops in rotation or adjacent crops have not been reported either.

### - Effects on useful arthropods and other non-target organisms.

In the numerous field tests performed up until today no adverse effects on useful arthropods have been observed. The risk for non-target organisms is considered insignificant.

### Examples

The following examples show preferred forms of carrying out the invention and intend to illustrate it clearly and rigorously in its entire extension. The variety of the examples reflects the overall essence of the invention, being therefore provided with an illustrative and non-limiting character for such invention.

### Example 1.- Protective coating based on an edible film-forming agent and garlic extract.

A formulation especially designed for its application in vegetables cultivated in a greenhouse can be the following:
- Film-forming agent based on acetic esters of fatty acid monoglycerides: 19.3%
- Mineral horticultural oil: 10%
- Aqueous natural garlic extract: 20%
- Identical natural organosulphur compounds of alliaceous plants: 3%
- Emulsifiers (Polysorbate 80 and sorbitan monooleate): 5%
- Water: 35.2%
- Monopropylene glycol: 7.5%

The application of 15-30 grams of this formulation per litre of mixture provides a high protection against numerous pests in various vegetables, cultivated both outdoors and in a greenhouse.

### Example 2 . - Protective coating abased on a film-forming food agent, garlic extract and horticultural oil.

A formulation especially designed for its application in fruits and having a medium water resistance can be the following:
- Film-forming agent based on polyvinyl acetate: 18.3% (with less than 0.25% of residual monomer)
- Aqueous natural garlic extract: 29.7%
- Mineral horticultural oil: 22%
- Identical natural organosulphur compounds of alliaceous plants: 2%
- Emulsifier (Polysorbate 80 and sorbitan monooleate): 4%
- Monopropylene glycol: 3%
- Ethanol: 1%
- Water: 20%

This coating has a higher specific activity against mites. The application of about 10-20 grams of this formulation per litre of mixture provides a high protection against persea mite in avocado and red spider mite in citruses.

### Example 3.- Protective coating based on a film-forming food agent and repellent active ingredients.

A formulation especially designed for its application in fruits and having a high water resistance can be the following:
- Acrylic acid ester copolymer aqueous dispersion (at 50%), free of plasticizers: 40%
- Aqueous natural garlic extract: 25%
- Mineral horticultural oil: 19.5%
- Identical natural organosulphur compounds of alliaceous plants: 3%
- Emulsifier (Polysorbate 80): 5%
- Monopropylene glycol: 7%
- Natural neem seed oil: 0.5%

The application of 15-20 grams of this formulation per litre of mixture provides an intense and prolonged protection against numerous pests in various fruit trees. Furthermore, the polymers acts as a support of the repellent agents, increasing their stability and maintaining their effect over time.

### Example 4.- Protective coating based on a food plastic polymer and the insecticide abamectin.

A formulation especially designed for its application in fruits and having a medium water resistance is presented as in the case of Example 2 of the Invention, but, additionally, in this case the polymer acts as a support of the repellent agents and of abamectin, increasing their stability and prolonging their effect over time. The formulation is:
- Polyvinyl acetate: 18.3% (with less than 0.25% of residual monomer)
- Aqueous natural garlic extract: 29.7%
- Mineral horticultural oil: 25%
- Identical natural organosulphur compounds of alliaceous plants: 2%
- Emulsifier (Polysorbate 80): 4% 20
- Abamectin: 0.018%
- Monopropylene glycol: 5%
- Water: 15.982%

### Example 5: Efficacy of a coating on Frankliniella occidentalis (Thrips) in pepper cultivated outdoors and in a greenhouse.

Thrips (*Frankliniella occidentalis*) are insects of great agronomic importance, in terms of damages, given that they have a large number of host crops and adventitious plants. The main crops attacked are pepper, eggplant, cucumber, beans, courgette, watermelon, melon and tomato. The cotton plant and fruit trees such as the nectarine trees stand out as alternative crops, and they also cause damages in ornamental plants such as the rosebush, gerbera, carnation, etc.

Their high power of adaptation to the Mediterranean climate and their high year-round phytophagous activity, both in protected crops and outdoors, cause an enormous interest in their control. The product described in Example 1 was tested to know its protective efficacy in the prevention or reduction of *Frankliniella occidentalis* (Thrips) attacks in vegetables, specifically in pepper (*Capsicum annuum*) cultivated outdoors and in a greenhouse. The objective is to determine the efficacy in the control of the pest, as well as to know the response of the crop to the treatment, in terms of vigour, greenness and tolerance.

### Test guidelines

### Conducted under GEP Standard: X

| EPPO Standards | Description |
|---|---|
| PP 2/29 | Solanaceous crops under protected cultivation |
| PP 1/160 | Thrips on glasshouse crops |
| PP 1/135 | Phytotoxicity assessment |
| PP 1/152 | Design and analysis of efficacy evaluation trials |
| PP 1/181 | Conduct and reporting of efficacy evaluation trials |

### Application description

| | 1^{st} | 2^{nd} | 3^{rd} |
|---|---|---|---|
| Application date: | Jun/18/2007 | Jun/25/2007 | Jul/03/2007 |
| Time of day: | 10:00 | 11:30 | 18:30 |
| Application timing: | POSPOS | POSPOS | POSPOS |
| Application site: | Leaf | Leaf | Leaf |
| Air temp.: | 23°C | 25°C | 27°C |
| % Relative humidity: | 54 | 63 | 60 |
| Wind speed: | 1 k/h | 0 k/h | 1 k/h |
| Presence of dew (Y/N): | No | No | No |
| % Cloud cover: | 0 | 30 | 0 |

### Application equipment

| | 1^{st} | 2^{nd} | 3^{rd} |
|---|---|---|---|
| Application equipment: | Maruyama | Maruyama | Maruyama |
| Operating pressure: | 5 atm | 5 atm | 5 atm |
| Nozzle type: | Conical | Conical | Conical |
| Solvent: | Water | Water | Water |
| Mixture volume: | 1000 l/ha | 1000 l/ha | 1000 l/ha |
| Tank mixing (Y/N) | No | No | No |

The treatments were applied on 6 plots, with 4 repetitions. The plots have an area of 18 m² and a density of 25000 plants/ha. Three applications were performed on each plot, allowing one week to elapse between them. The remaining evaluations were performed 2 days after the first application, 3 days after the second application and 9 days after the third application. The incidence of larvae and adults per flower was evaluated, with a count of 25 units per plot and repetition.

The results of the test are included in the following table:

| Treatment applied | Number of adults+larvae per flower (average) | | | | |
|---|---|---|---|---|---|
| | 2 days after 1^{st} A | 2^{nd} A, 7 days after 1^{st} A | 3 days after 2^{nd} A | 3^{rd} A, 7 days after 2^{nd} A | 9 days after 3^{rd} A |
| Control | 25.80 | 44.063 | 105.850 | 62.235 | 133.000 |
| Coating 1, 10 g/l | 18.20 | 22.900 | 33.000 | 26.000 | 14.190 |
| Coating 1, 15 g/l | 19.30 | 17.770 | 27.983 | 18.980 | 14.990 |
| Coating 1, 20 g/l | 17.00 | 8.830 | 16.993 | 13.985 | 9.003 |
| Coating 1, 30 g/l | 15.90 | 10.685 | 15.970 | 12.000 | 6.020 |
| Align®, 1.25 ml/l (3.2% azadirachtin) | 20.30 | 22.500 | 40.930 | 42.960 | 36.970 |

As can be observed in the evaluations, after 3 applications of the coating, its activity is consolidated, with a very low level of presence of adults and larvae, less than what was evaluated in the plots of the reference product Align®. This is due to the fact that after the 3 applications, the level of protection of the crop is virtually total as a result of the coating agent.

No phytotoxicity symptom was observed on the crop. The vigour of the vegetation was excellent due to the positive effect of the formulation on the water stress of the plant.

It is therefore concluded that said protective coating can be used as a phytosanitary defence means, without biocidal activity, which prevents or reduces the attack of *Frankliniella occidentalis* (Thrips) on pepper cultivated outdoors. For this pest and crop, the dose to be recommended would be 20 grams of product per litre of mixture.

The product described in Invention Example 1 was also tested to know its protective efficacy in the prevention or reduction of attacks of *Frankliniella occidentalis* (Thrips) in pepper (Capsicum annuum) cultivated in a greenhouse.

### Test guidelines

Conducted under GEP Standard: X

EPPO Standards: PP2/29, PP1/160, PP1/135, PP1/152 and 1/181.

### Application description

| | 1^{st} | 2^{nd} |
|---|---|---|
| Application date: | May/02/2007 | May/09/2007 |
| Time of day: | 10:00 | 10:00 |
| Application method: | Spraying | Spraying |
| Application timing: | POSPOS | POSPOS |
| Application site: | Leaf | Leaf |
| Air temp.: | 33°C | 35°C |
| % Relative humidity: | 31 | 30 |
| Wind speed: | 0 k/h | 0 k/h |

### Application equipment

| | 1^{st} | 2^{nd} |
|---|---|---|
| Application equipment: | Motorized backpack | Motorized backpack |
| Operating pressure: | 7 atm | 7 atm |
| Nozzle type: | Conical | Conical |
| Solvent: | Water | Water |
| Mixture volume: | 1000 l/ha | 1000 l/ha |
| Tank mixing (Y/N) | No | No |

The treatments were applied on 6 plots, with 4 repetitions. The plots have an area of 12 m². Two applications were performed on plot, allowing one week to elapse between them. The remaining evaluations were performed 2 days after the first application, and 2 and 7 days after the second application. The incidence of larvae and adults per flower was evaluated, with a count of 25 units per plot and repetition.

The results of the test are included in the following table:

| Treatment applied | Number of adults+larvae per flower (average) | | | | |
|---|---|---|---|---|---|
| | 1^{st} A | 2 days after 1^{st} A | 2^{nd} A, 7 days after 1^{st} A | 2 days after 2^{nd} A | 7 days after 2^{nd} A |
| Control | 5.1 | 5.0 | 7.2 | 10.6 | 12.4 |
| Coating 1, 10 g/l | 6.3 | 3.7 | 3.7 | 6.0 | 7.0 |
| Coating 1, 15 g/l | 5.1 | 2.8 | 3.6 | 4.6 | 5.9 |
| Coating 1, 20 g/l | 5.8 | 2.2 | 3.1 | 4.0 | 4.3 |
| Coating 1, 30 g/l | 4.6 | 1.9 | 2.7 | 3.6 | 4.4 |
| Malathion, 2 ml/l | 5.9 | 3.3 | 5.8 | 8.1 | 9.4 |

As has already been emphasized throughout the description, this coating does not have a biocidal action, but rather it acts by blocking the access of the insects to the leaf epidermis of the crops, and at the same with a repellent action, preventing their feeding. Thus, it prevents or delays the need to use conventional insecticides and, as can be observed in the evaluations, after 2 applications of the coating, its activity is consolidated, with a very low level of presence of adults and larvae, less than what was evaluated in the plots of the reference product malathion.

It should be emphasized that no phytotoxicity symptom was observed on the crop. The vigour of the vegetation was excellent due to the positive effect of the formulation on the water stress of the plant.

It is therefore concluded that said protective coating can be used as a phytosanitary defence means, without biocidal activity, which prevents or reduces the attack of *Frankliniella occidentalis* (Thrips) on pepper cultivated in a greenhouse and outdoors. For this pest and crop, the dose to be recommended will be between 15 to 20 grams of product per litre of mixture.

### Example 6: Efficacy of a coating on "persea mite" (Oligonychus persea) in avocado.

The product described in Example 2 was tested to know its activity in the prevention or reduction of attacks of *Oligonychus persea* (persea mite) in fruits, specifically in avocado (*Persea Americana*), Hass variety. The objective is to determine the efficacy in the control of the pest, as well as to know the response of the crop to the treatment, in terms of vigour, greenness and tolerance.

### Test guidelines

### Conducted under GEP Standard: X

EPPO Standards: PP 1/135, PP 1/152, PP1/181.

### Application Description

| | 1^{st} | 2^{nd} |
|---|---|---|
| Application date: | Aug/10/2007 | Aug/17/2007 |
| Time of day: | 8:00 | 8:00 |
| Application method | Drip point spraying | Drip point spraying |
| Application timing: | POSPOS | POSPOS |
| Application site: | Leaf | Leaf |
| Air temp.: | 19°C | 20°C |
| % Relative humidity: | 68 | 63 |
| Wind speed, unit:: | 0 | 0 |
| Presence of dew (Y/N): | No | No |
| % Cloud cover: | 0 | 0 |

Application equipment: The application equipment is described in the following table.

| | 1^{st} | 2^{nd} |
|---|---|---|
| Application equipment: | Backpack | Backpack |
| Operating pressure: | 7 atm | 7 atm |
| Nozzle type: | Conical | Conical |
| Solvent: | Water | Water |
| Mixture volume: | 1300 l/ha | 1300 l/ha |
| Tank mixing (Y/N) | No | No |

The treatments were applied on 7 plots, with 4 physical repetitions. Two applications were performed on each plot, allowing one week to elapse between both. The evaluations were performed 3 and 7 days after the first application, and 3, 7 and 10 days after the second application.

The results of the efficacy of the product on *Poligonychus persea* (persea mite) are included in the following table.

| Treatment | Number of adults+larvae per leaf (average) | | | | |
|---|---|---|---|---|---|
| applied | 3 days after 1^{st} A | 2^{nd} A, 7 days after 1^{st} A | 3 days after 2^{nd} A | 7 days after 1^{st} A | 10 days after 2^{nd} A |
| Control | 5.260 | 9.510 | 11.870 | 14.340 | 15.790 |
| Coating 2, 5 g/l | 2.240 | 3.800 | 3.590 | 4.610 | 6.020 |
| Coating 2, 10 g/l | 1.338 | 2.015 | 1.915 | 2.185 | 2.175 |
| Coating 2, 20 g/l | 0.990 | 1.230 | 0.860 | 0.920 | 0.540 |
| Coating 2, 30 g/l | 1.085 | 0.825 | 0.715 | 0.745 | 0.500 |
| Coating 2, 40 g/l | 0.853 | 0.600 | 0.460 | 0.530 | 0.450 |
| Rotenone, 3 ml | 3.835 | 6.960 | 8.250 | 8.810 | 10.000 |

From the results of the table it is obtained as a conclusion that all the doses of Coating 2 tested resulted in a considerable reduction in the level of attack of "persea mite", a spectacular reduction from doses greater than 10 g/l, and without phytotoxicity effects having occurred with any of the treatments.

### Example 7: Efficacy of a coating on leafminer fly (Phyllocnistis citrella) in lemon tree.

The product described in Example 4 was tested to know its activity for preventing or reducing attacks of leafminer fly (*Phyllocnistis citrella*) in citruses, specifically in lemon tree. The objective is to determine the efficacy and the response of the crop in terms if vigour, greenness and tolerance.

This coating has a concentration of 0.018% abamectin, therefore, in the example, its action is compared with that obtained when applying a treatment of summer oil and an emulsifiable concentrate containing 1.8% abamectin.

### Test guidelines

Conducted under GEP Standard: X:

EPPO Standards: PP 1/135, PP 1/152, PP1/181, PP2/27 (Citrus).

### Application description

| | 1^{st} | 2^{nd} |
|---|---|---|
| Application date: | Aug/27/2007 | Sep/07/2007 |
| Time of day: | 8:30 | 11:30 |
| Application method | Drip point spraying | Drip point spraying |
| Application timing: | POSPOS | POSPOS |
| Application site: | Leaf | Leaf |
| Air temp.: | 23°C | 27°C |
| % Relative humidity: | 63 | 65 |
| Wind speed: | 4 KPH | 4 KPH |
| Wind direction: | E | E |
| Presence of dew (Y/N) : | No | No |
| Soil moisture | Suitable | Suitable |
| % Cloud cover: | 0 | 0 |

### Application equipment

The application equipment is described in the following table.

| | 1^{st} | 2^{nd} | 3^{rd} |
|---|---|---|---|
| Application equipment: | Maruyama | Maruyama | Maruyama |
| Operating pressure: | 40 atm | 40 atm | 40 atm |
| Nozzle type: | Conical | Conical | Conical |
| Solvent: | Water | Water | Water |
| Mixture volume: | 3000 l/ha | 3000 l/ha | 3000 l/ha |
| Tank mixing (Y/N) | No | No | No |

The treatments were applied on 6 plots, with 4 grouped repetitions. The plots had a surface area of 125 m² and a density of 5 trees per plot. Two applications were performed on each plot, allowing eleven days to elapse between both. The evaluations were performed 3 and 7 and 10 days after both applications, respectively.

The results of the efficacy of the product on the lepidopteran are included in the following table.

| Treatment applied | Number of adults+larvae per leaf (average) | | | | | |
|---|---|---|---|---|---|---|
| | 3 days after 1^{st} A | 7 days after 1^{st} A | 10 days after 1^{st} A | 3 days after 2^{nd} A | 7 days after 2^{nd} A | 10 days after 2^{nd} A |
| Control | 3.7 | 4.3 | 6.2 | 6.6 | 8.5 | 12.5 |
| Coating 4 g/l | 2.4 | 2.8 | 3.2 | 4.4 | 5.0 | 6.1 |
| Coating 4, | 1.2 | 1.2 | 1.7 | 2.0 | 2.1 | 2.6 |
| Coating 4, 20 g/l | 0.6 | 0.9 | 1.3 | 1.9 | 2.4 | 2.6 |
| Coating 4, 30 g/l | 0.4 | 0.7 | 0.9 | 1.3 | 1.5 | 1.6 |
| Coating 4, 40 g/l | 0.0 | 0.0 | 0.2 | 0.2 | 0.3 | 0.3 |
| 1.8% abamectin, 30 g/l EC | 2.4 | 2.6 | 2.8 | 3.7 | 3.6 | 4.0 |

From the results of the table it is obtained as a conclusion that all the tested doses of Coating 4 resulted in a considerable prevention/reduction in the level of attack of the fly, a spectacular reduction from doses greater than 10 g/1, and without phytotoxicity effects having occurred with any of the treatments.

The results show how, despite the fact that the conditions of the campaign were not very favourable for the increase of the attacks of the leafminer fly, the developed protective coating has considerably reduced the presence of adults and larvae on the leafs, with a significant difference with respect to the standard reference product 1.8% abamectin and to the control. If the results of the application of the standard are compared with those of the developed coating, it is verified how, despite the smaller dose of active ingredient that the coating has with respect to the standard, the effectiveness obtained with its application is greater, a consequence of the physical barrier to the attack conferred by the polymer.

The tolerance of the crop was correct, as well as its response in terms of vigour and greenness, and phytotoxicity effects were not manifested.

Having sufficiently described the nature of the present invention as well as the manner of putting it into practice, it is not considered necessary to further explain it so that a - - person skilled in the art can understand its scope and the advantages derived therefrom, stating that, within its essential nature, it can be carried out to practice in other embodiments which differ in detail from those indicated as an example, and which will likewise be covered by the protection that is sought, provided that its fundamental principle is not altered, changed or modified.

## Claims

1. A protective coating that can be applied as a phytosanitary protection means to protect against agricultural pests and diseases, which acts by preventing or mitigating the attack of pests, diseases, physiological alterations or derived problems, with a negative environmental impact on productions of agricultural crops, likewise being able to enhance their health and growth, **characterized in that** said protective coating (1) is essentially formed from a film-forming (film-producing) agent (2) which externally covers each plant (4) of the crop to be treated, being formed as a basic element in a complex that can also include an active agent (3), which is in turn formed by other substances having a specific activity on pests, diseases, physiological alterations or abiotic stress factors, generating a compatible formulation to be used in each case for each type of crop; **in that** said film-forming agent (2) is suitable for coming into contact with foods, **in that** it forms a potential support of toxic or phytotoxic agents, decreasing the toxicological and residue effects of said toxic agents, and **in that** said basic element is present in the formulation in a percentage of between 3 and 60 wt.-%.

2. The protective coating that can be applied as a phytosanitary protection means to protect against agricultural pests and diseases according to claim 1, **characterized in that** the film-forming agent (2) is formed by polymers obtained by the polymerization or copolymerization of monomers such as vinyl acetate, acrylic acid, acrylic acid esters (acrylates), fatty acid mono- and diglycerides and the esters thereof, as well as by acrylic acid ester, vinyl acetate and fatty acid mono- and diglyceride ester copolymer aqueous dispersions.

3. The protective coating that can be applied as a phytosanitary protection means to protect against agricultural pests and diseases according to claims 1 and 2, **characterized in that** the active agent (3) which contains or can contain the formulation has a different origin and activity against pests and diseases, and consists of organic or aqueous natural extracts of species and plants; or of plant-isolated active compounds, or natural compounds identical thereto; or compounds with insecticidal or antiparasitic properties isolated from plants or obtained by fermentation; or biological insecticides and acaricides, or active synthetic compounds; or other substances having an analogous behaviour; and **in that** said elements are present in the formulation by between 0.0001 and 60 wt.-% thereof, according to the nature of the active compound.

4. The protective coating that can be applied as a phytosanitary protection means to protect against agricultural pests and diseases according to claims 1 to 3, **characterized in that** it optionally incorporates mineral or horticultural oil as another reinforcing means, the amount of oil therein being able to vary between 0 and 40% of the weight thereof.

5. The protective coating that can be applied -as a phytosanitary protection means to protect against agricultural pests and diseases according to claims 1 to 4, **characterized in that** it optionally further includes a wide variety of coadjuvants, additives and/or reinforcing substances which are authorized for food or agricultural use, and the relative proportions of which can range within wide limits depending on the nature of the components forming them, and on their final application.

6. The protective coating that can be applied as a phytosanitary protection means to protect against agricultural pests and diseases according to 1 to 5, **characterized in that** it optionally further includes pesticides, including fungicides and herbicides, fertilisers and biocontrol agents; and **in that** said ingredients can be added in an independent or integrated manner in the coating.

7. A method for applying a protective coating that can be applied as a phytosanitary protection means to protect against agricultural pests and diseases according to claims 1 to 6, **characterized in that**, as appropriate in each case, the composition of the protector is applied in the form of pure active formulations, or in mixtures, in aqueous solutions or generally in any formulation; and **in that** the coating is applied by means of spraying, fogging, wetting, atomisation, or any other system of treatment or application, preferably being by spraying of a solution of the composition in water, with a dose between 5 to 50 grams of formulation per litre of water.
